(19) **Europäisches Patentamt / European Patent Office / Office européen des brevets**

(11) **EP 1 881 353 B1**

(12) **EUROPEAN PATENT SPECIFICATION**

(45) Date of publication and mention
of the grant of the patent:
**16.02.2011  Bulletin 2011/07**

(51) Int Cl.:
***G02B 6/44*** (2006.01)

(21) Application number: **06076440.4**

(22) Date of filing: **19.07.2006**

(54) **Optical fibre cable and method for modifying the same**

Glasfaserkabel und Verfahren zu dessen Abänderung

Câble à fibre optique et son procédé de modification

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**23.01.2008  Bulletin 2008/04**

(73) Proprietor: **Draka Comteq B.V.**
**1083 HJ  Amsterdam (NL)**

(72) Inventors:
• **Griffioen, Willem**
**2461 XJ Ter Aar (NL)**

• **Nothofer, Klaus**
**40699 Erkrath (NL)**

(74) Representative: **Van kan, Johan Joseph Hubert et al**
**Algemeen Octrooibureau**
**P.O. Box 645**
**5600 AP  Eindhoven (NL)**

(56) References cited:
**EP-A2- 1 302 797      US-A1- 2002 081 083**
**US-A1- 2005 249 472**

EP 1 881 353 B1

**Description**

The present invention relates to optical fibre cables and more in particular to an optical fibre cable comprising a main tube having a wall, which wall encloses a hollow space, in which hollow space one or more guide tubes are present, at least one of which guide tubes contains at least one optical waveguide. The present invention also relates to a method for modifying an optical fibre cable comprising a main tube having a hollow space. The present invention furthermore relates to an element intended for installation in the hollow space of an optical fibre cable, which fibre cable comprises a main tube having a wall, which wall encloses the aforesaid hollow space, in which hollow space one or more guide tubes are present, which guide tube(s) may contain at least one optical waveguide.

Such a cable is known from US patent No. 6,572,081. Besides the cable, said patent specification describes a method for installing guide tubes, through which optic communication cables are routed. Cables of the above type are generally installed below the earth's surface, after which the main tube thus present below the earth's surface is accessible via the ends thereof.

The optical fibre cable according to the present invention may also be defined as a tube system for optical fibre cables, wherein a tube, also known as "main duct", of such a tube system corresponds to the main tube of the present application. Furthermore, the guide tubes according to the present invention are also referred to as "micro ducts".

After installation of the main tube, the number of guide tubes and the optical waveguides that may be present therein may be adapted to the current need, whilst it is also possible to add guide tubes to the hollow space and optical waveguides to the guide tubes.

Guide tubes containing optical waveguides may also be installed prior to the installation of the main tube. Usually, however, said main tube is installed first and subsequently the guide tubes are installed by means of the blow, push, float or draw method. Finally, optical waveguides can be installed in the guide tubes by means of the blow, push, float or draw method.

A drawback of the optical fibre cables that are already commercially available is that the main tube and possibly the guide tubes; once installed, appear not to be leak-tight to water. Consequently there is a possibility that water will enter the main tube or the guide tubes. A cause for said ingress or in-leakage of water is that the main tube and/or the guide tubes are damaged before, during or after installation thereof. Another cause is that connections between various main tubes and/or guide tubes in a cable network have not been made completely watertight. In addition to that, there is a risk of water remaining behind in the main tube when the so-called float method is used for installing guide tubes or optical waveguides, which may lead to adverse effects.

An adverse effect of the presence of water in the hollow space of the main tube is that said water may freeze at low temperatures. The specific volume of water increases upon freezing, resulting in the ice thus formed exerting a pressure both on the wall of the main tube and on the guide tubes. Said pressure will also be exerted, via the guide tubes, on the optical waveguides present therein. The consequence of this may be that the signal being conveyed through the optical waveguides will be disturbed or fall away, as a result of which the communication network of which the cable forms part will not function properly, if at all.

At worst, the above shortcoming is of a permanent nature, making it necessary to repair the cable and/or replace the optical waveguides, which involves considerable expense.

German Offenlegungsschrift No. 2842604 discloses a method for dimensioning the wall of a tube in which optical waveguides are present such that the adverse effects of the freezing of water are eliminated.

It is known in the art to reduce or prevent the ingress of water into optical fibre cables. Usually, use is made of water-absorbing or water-blocking materials, such as a tape, a yarn, a gel, a powder or combinations thereof.

US patent No. 4,815,813 discloses water-blocking strips or yarns which may be wrapped around or be provided parallel to a central tube.

European patent application No. 1 081 519 A1 discloses the use of a a water-swellable binding yarn or tape wrapped around a bundle of optical fibres or around tubes in which optical fibres are present.

US patent No. 6,633,709 discloses a cable wherein water-blocking yarns are provided around stacked fibre optic ribbons with or without the use of a water-absorbing powder.

The use of one or more of said materials involves additional expense and, in addition, makes it more difficult to install guide tubes containing optical waveguides in the main tube by means of the blow, push , float or draw method. When a water-absorbing gel is introduced into the hollow space, for example, the frictional resistance that is subsequently generated between a guide tube to be installed and the aforesaid gel will be so high that only short installation distances can be bridged, which means that the length of the main tube is limited. The consequence is that it is necessary to couple successive main tubes together more frequently, which is undesirable, as it involves an increased risk of leakage.

It is an object of the present invention to develop an optical fibre cable, which cable is resistant to low-temperature conditions, in particular when moisture is present in the cable.

Another object is to develop an optical fibre cable that will not be adversely affected by water that has entered the hollow space, which water will freeze under the influence of a low temperature.

It is furthermore an object of the present invention to develop an element that can be installed in the hollow space of a cable that has already been installed so as to render said cable resistant to low-temperature conditions.

The optical fibre cable as referred to in the preamble is characterised in that at least one separate compressible element is present in the hollow space, which element has a lower resistance to deformation than the wall of the guide tube and the wall of the main tube and which extends along the length of the main tube.

In the situation in which water has entered the hollow space of the optical fibre cable and said water freezes under the influence of a low temperature, the difference in volume caused by the difference in specific volume of water in solid condition and water in liquid condition will be compensated by compression of the compressible element. The compressible element will thus decrease in volume. When the temperature increases, the ice that had previously formed will melt again and the volume of the compressible element will increase.

Although a tube provided with a compressible foam layer of a synthetic material on the inner surface thereof is known from Japanese patent application JP 2006050713, the foam layer that is used therein cannot be considered to be present as a separate entity. Since the foam layer described in said document is placed against the inner side of the tube, the internal volume of the tube, in which guide tubes can be installed, is significantly reduced. In addition, because of the special construction a very large amount of foam per unit length of tube is needed. Furthermore, the foam layer must adhere to the inner wall of the tube in all temperature conditions, because the foam layer will come loose from the wall in case of insufficient adhesion, causing the tube to become clogged. The installation of guide tubes is no longer possible in that case. The necessity to realise a good adhesion leads to limitations, inter alia as regards the choice of material for the tube and/or the foam layer.

The compressible element according to the present invention is separately present in the main tube. The term separately is understood to mean that the element is not durably connected to the wall of the main tube. The fact that the element is separately present also implies that the element does not necessarily have to be added to the main tube during the manufacturing process. It may also be provided simultaneously with the installation of guide tubes and/or optical waveguides. In addition to that, the present invention makes it possible to modify a conventional optical fibre cable into a cable according to the present invention by the addition of a compressible element.

In the optical fibre cable according to the present invention, the compressible element does not contain optical fibres.

In the optical fibre cable according to the present invention, the compressible element is freely movable within the hollow space.

In an alternative embodiment of the optical fibre cable according to the present invention, the compressible element is provided around one or more guide tubes.

In a special embodiment of the optical fibre cable according to the present invention, the compressible element consists of at least a sheath and a core.

In another embodiment of the optical fibre cable according to the present invention, the compressible element consists at least of a sheath and a core, wherein the sheath is made of the same material as the wall of the guide tube.

In a preferred embodiment of the optical fibre cable according to the present invention, the compressible element consists of the same material.

In a special embodiment of the optical fibre cable according to the present invention, in which the compressible element consists of the same material, the compressibility of the element varies over the cross-section thereof.

In a special embodiment of the optical fibre cable according to the present invention, in which the compressible element consists of the same material, the compressibility of the element is higher at the outer side of the element than in the centre of the element.

In a desired embodiment of the optical fibre cable according to the present invention, the compressible element is provided with one or more reinforcing elements, preferably a centrally located reinforcing element.

In another special embodiment of the optical fibre cable according to the present invention, one or more reinforcing elements are present in the sheath of the compressible element, which reinforcing elements extend along the length of the cable.

In a special embodiment of the optical fibre cable according to the present invention, the compressible element has a circular cross-section.

The compressible element according to the present invention is preferably elastic, so that the element can return to its original shape after being compressed when the force that caused said compression is released.

The element as referred to in the preamble is characterised in that the element is compressible and that the resistance of the element to deformation is lower than the resistance to deformation of the wall of the guide tube and the wall of the main tube of the optical fibre cable. Special embodiments thereof are defined in the dependent claims.

The method as referred to in the preamble is characterised in that a compressible element is installed in the hollow space of a main tube of an optical fibre cable. Special embodiments thereof are defined in the dependent claims.

Preferred embodiments of the present invention, which must not be construed as being limitative, will be defined in the dependent claims and be discussed and illustrated in the description below and the figures.

Figure 1 shows an optical fibre cable according to the present invention.

Figure 2 shows an optical fibre cable according to the present invention in the situation in which the compressible element is compressed.

Figures 3-8 show embodiments of the compressible element according to the invention.

Figures 9-13 show various embodiments of the compressible element according to the present invention.

Figure 14 shows a specific embodiment of the compressible element according to the present invention.

Figure 15 shows a specific embodiment of the compressible element according to the present invention.

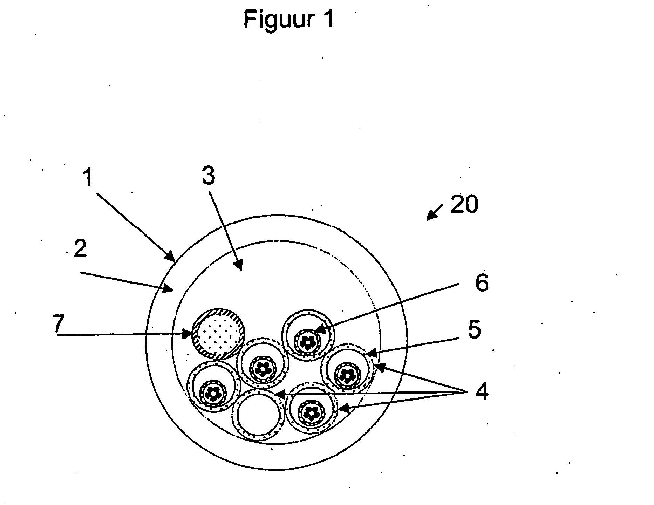

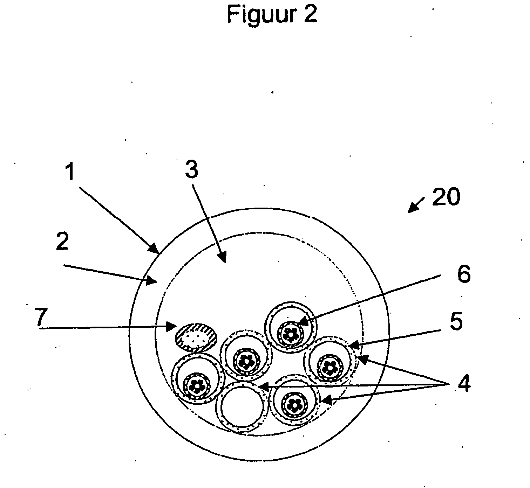

A first embodiment of the present invention is shown in figures 1 and 2. Figure 1 shows an optical fibre cable 20 consisting of a main tube 1 that encloses a hollow space 3. The main tube 1 is formed by a wall 2. Present within the hollow space 3 are one or more guide tubes 4, each having a wall 5. The guide tubes 4 may contain one or more optical waveguides 6. Also present within the hollow space 3 is a compressible element 7. The free volume within the main tube 1 is made up of the volume of the hollow space 3 minus the volume that is taken up by the guide tubes 4 and the compressible element 7. Figure 1 also shows that a guide tube does not necessarily have to contain an optical waveguide. It should be noted that the number of guide tubes 4 and elements 7 shown in figure 1 is not limited to a specific number. In a special embodiment, the hollow space 3 may also be provided with a water-blocking gel.

Damage to the main tube 1, or a poorly made connection of two or more remained tubes 1, or even the use of the float method for installing the main tube 1 and/or the guide tube 4 may result in the ingress of water (not shown) into the free volume of the cable 20.

At low temperatures, the water present in the free volume may freeze. As water in solid condition has a specific volume that is about 10% larger than that of water in liquid form, the compressible element 7 will be compressed, as is schematically indicated in figure 2.

According to the present invention, the volume increase caused by the ice is thus compensated by a volume decrease of the compressible element 7. As a result, the guide tubes 4 and the main tube 1 will not be subjected to pressure. Nor will the optical waveguides 6 also be subjected to pressure and the communication network (not shown) of which the cable 20 forms part will continue to function. The main tube 1 will not sustain any (further) damage, either.

The main tube 1 is for example made of high-density polyethylene (HDPE), polyamide (PA), polyvinyl chloride (PVC), polypropylene (PP) or a metal, or possibly a combination thereof. If the resistance to deformation of the compressible element 7 is lower than the resistance to deformation of the main tube 1, the volume increase of water caused by freezing thereof will lead to the compressible element 7 being compressed, without the frozen water exerting a pressure on the main tube 1. The term deformation of the compressible element 7 is understood to mean compression.

The guide tubes 4 are for example made of high-density polyethylene (HDPE), low-density polyethylene (LDPE) or medium-density polyethylene (MDPE). If the resistance to deformation of the compressible element 7 is lower than the resistance to deformation of the guide tubes 4, the volume increase of the frozen water will lead to the compressible element 7 being compressed, without the frozen water exerting a pressure on the guide tubes 4. The term deformation of the compressible element 7 is understood to mean compression.

The optical waveguides 6 may be individual optical fibres, which may or may not be provided with one or more layers of a protective coating. The optical waveguides may also be present in the form of so-called ribbons. In a ribbon, one or more optical fibres may be densely embedded in a matrix material. Furthermore, the optical fibres or the ribbons may also be used as a bundle, for example in the form of a cable. Said bundle may or may not be provided with reinforcing elements.

The term optical fibre is furthermore understood to include both plastic-based and silica-based optical fibres.

The term compressible element 7 is understood to mean an element which will decrease in volume under the influence of a pressure being exerted thereon, and which will possibly increase in volume again as soon as the cause of the pressure that leads to the volume decrease is removed, so that the element may be more or less regarded as elastic. When water in liquid condition that is present in the hollow space 3 of the main tube freezes, said water will expand. The resulting volume increase amounts to about 10%. A pressure will be exerted on the compressible element 7 as a result of said expansion, causing the element 7 to decrease in volume. Once the volume of the compressible element 7 has decreased, the pressure caused by the expansion of the water is released. The volume increase of the water caused by the freezing thereof has thus been compensated by the compressible element 7. The volume of the water that is present in solid form in the hollow space 3 of the main tube 1 will decrease when said water passes into the liquid phase. Subsequently, the volume of the compressible element 7 will increase again as a result of said volume decrease.

A first aspect of the compressible element 7 is that the resistance to deformation thereof ($W_{ese}$) is lower than the resistance to deformation of the guide tubes 4 ($W_{gb}$) and of the main tube 1 ($W_{hb}$),

$$W_{ese} < W_{gb} \text{ and}$$

$$W_{ese} < W_{hb} \qquad\qquad \text{formula 1}$$

As soon as the resistance to deformation of the compressible element 7 is lower than the resistance to deformation of the guide tubes 4 and/or the main tube 1, the element 7 will remove pressure. The compressible element 7 thus compensates for the aforesaid increase in specific volume.

The desired volume compensation can be obtained by using one or more compressible elements 7. In the situation in which more than one compressible element 7 is used, the sum of the individual volume compensations of the compressible elements 7 must be equal to the total volume to be compensated. The volume decrease per compressible element 7 does not necessarily have to be the same for each individual compressible element 7.

Preferably, the compressible element 7 is separately present along the entire length of the cable 20. The term separately is understood to mean that the element 7 need not be durably connected to the wall 2 of the main tube 1. In particular, the compressible element 7 is freely movable within the hollow space 3. In an alternative embodiment, the compressible element 7 is provided around one or more guide tubes 4.

The compressible element 7 does not contain optical fibres.

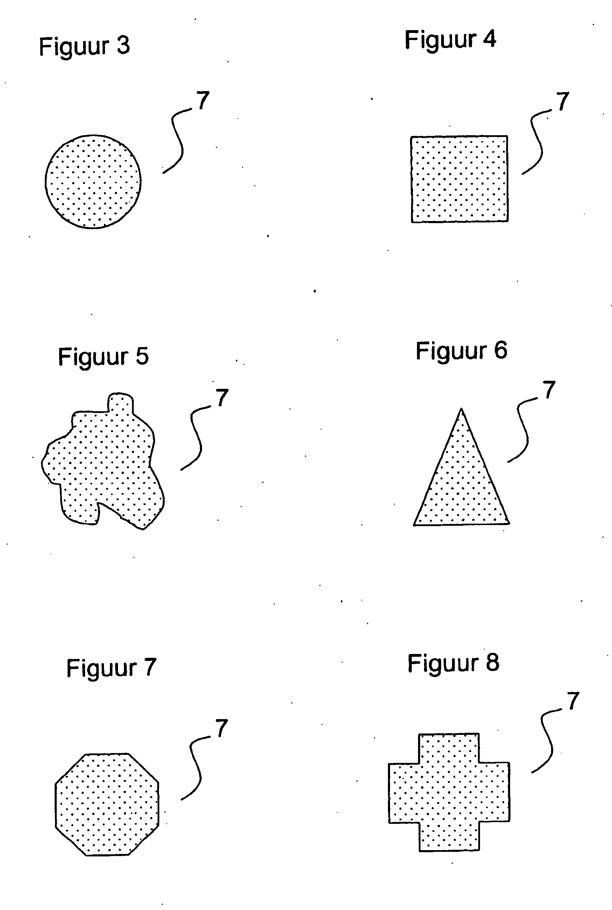

Various cross-sectional shapes of the compressible element 7 are possible, as is illustrated in figures 3-8.

In a preferred embodiment, the compressible element 7 has a circular cross-section. This makes it possible to install the compressible element 7 in a manner comparable to the installation of the guide tubes. In the situation in which the external diameter of the compressible element 7 is substantially the same as the external diameter of the guide tubes 4, it is possible to use the same equipment for installing the element 7 and the guide tubes 4.

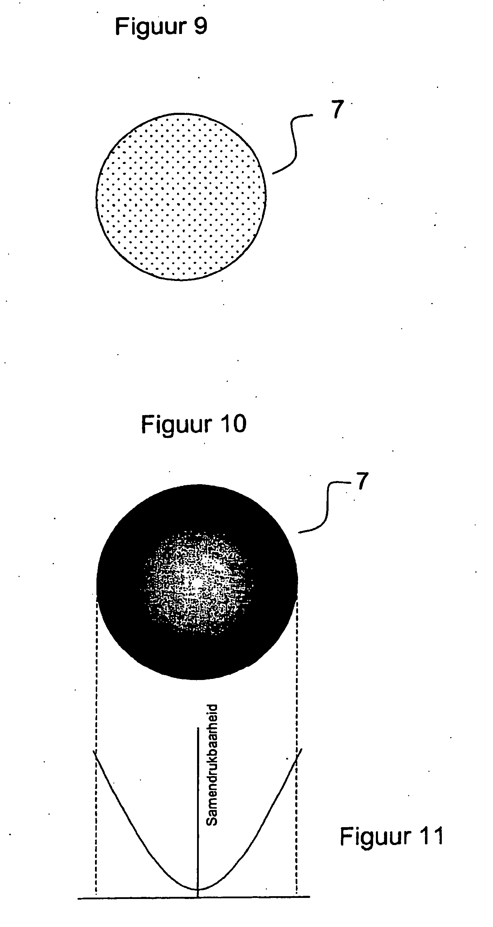

The compressible element 7 may be made of the same material, as is schematically indicated in figure 9. The material may for example be a polyolefin foam, a polyurethane foam or a rubber, with the choice of material being determined by the requirements that are made of the element 7 in relation to the choice of material and the wall thicknesses of the main tube 1 and the guide tubes 4.

In an alternative embodiment, which is schematically shown in figure 10, the compressibility varies over the thickness of the compressible element 7. An example of such a variation is schematically shown in figure 11. The compressibility of the compressible element 7 is higher at the outer circumference than in the centre.

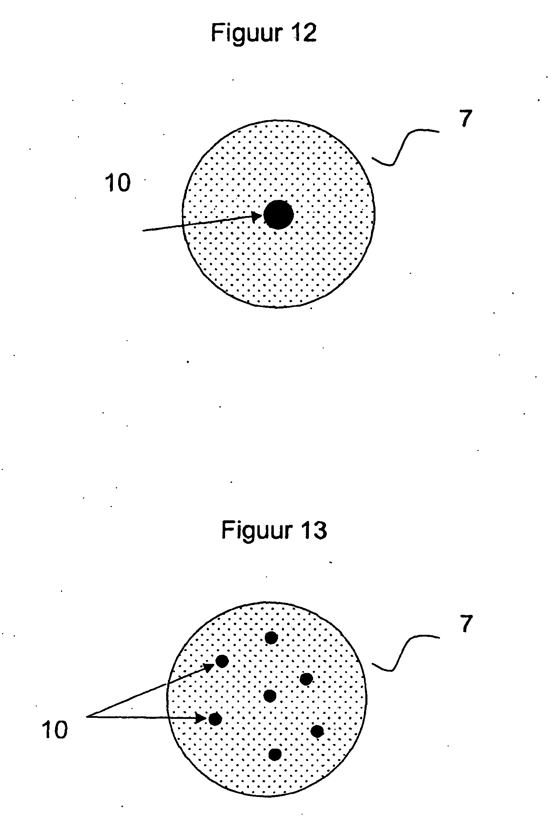

In another alternative embodiment, which is schematically shown in figure 12, the compressible element 7 contains a central reinforcing element 10.

In another alternative embodiment, which is schematically shown in figure 13, the compressible element 7 comprises several reinforcing elements 10.

The reinforcing elements 10 facilitate the installation of the compressible element 7, they may be made of steel or of a fibre-reinforced plastic, for example.

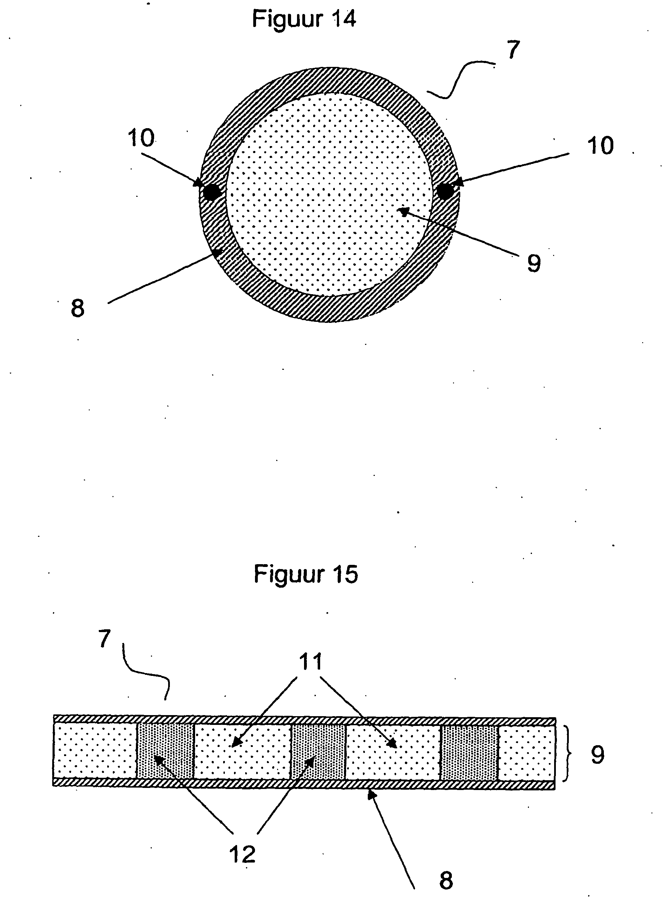

The compressible element 7 may also be built up of a sheath 8 and a core 9, as is schematically shown in figure 14. The sheath 8 may contain one or more reinforcing elements 10.

In a preferred embodiment, the sheath 8 is made of the same material as the guide tube 4.

The term core 9 is understood to mean the space that is enclosed by the sheath 8. The core 9 may be manufactured in a similar manner as the compressible element, which is made of one material. The core 9 may also be configured as a hollow space, or it may be partially or entirely provided with a gel or a grease, which may have water-absorbing properties, for example.

Figure 15 is a side view of an alternative embodiment of the compressible element 7 of figure 14.

The core 9 of the compressible element 7 consists of segments 11 and 12. The segments 11 may for example be made of a plastic, a plastic foam, a rubber, a gel or a grease. The segments 12 are only partially filled, if at all, with one of the aforesaid materials. The segments 11 and 12 may not have the same resistance to deformation, or compressibility.

The above embodiments of the compressible element 7 make it possible to modify an already installed conventional optical fibre cable into an optical fibre cable according to the present invention. To that end, one or more compressible elements 7 may be provided in the hollow space of the conventional optical fibre cable. An optical fibre cable thus modified is similar to the cable 20 of figure 1. Preferably, the compressible element 7 is installed simultaneously with the guide tubes 4, in which case the equipment that is used for installing the guide tubes 4 is also used for installing the element 7. When such an installation method is used, the compressible element 7 will preferably have a circular cross-section, and the properties of the material at the outer side of the element 7 will be comparable to those of the material of the wall 5 of the guide tubes 4. The requirements as regards the material properties can be met, for example, if the compressible element 7 is built up of a sheath 8 and a core 9, with the sheath 8 and the wall 5 being made of the same material.

**Claims**

1. An optical fibre cable (20) comprising a main tube (1) having a wall (2), which wall (2) encloses a hollow space (3), in which hollow space (3) one or more guide tubes (4) having a wall (5) are present, at least one of which guide tubes (4) contains at least one optical waveguide (6), **characterised in that** at least one separate compressible element (7) is present In the hollow space (3), which element (7) has a lower resistance to deformation than the wall (5) of the guide tube (4) and the wall (2) of the main tube (1), which element extends along the length of the main tube (1) and is freely movable within the hollow space (3).

2. An optical fibre cable (20) according to claim 1, **characterised in that** the compressible element (7) does not contain optical fibres.

3. An optical fibre cable (20) according to any one or more of the preceding claims 1-2, **characterised in that** said at least one compressible element (7) consists of at least a sheath (8) and a core (9).

4. An optical fibre cable (20) according to claim 3, **characterised in that** said sheath (8) is made of the same material as the wall (5) of the guide tube (4).

5. An optical fibre cable (20) according to any one or more of the preceding claims 1-3, **characterised in that** said at least one compressible element (7) consists of the same material.

6. An optical fibre cable (20) according to any one or more of the preceding claims 1-5, **characterised in that** the compressibility of the compressible element (7) varies over the cross-section of the compressible element (7).

7. An optical fibre cable (20) according to claim 6, **characterised in that** the compressibility of the compressible element (7) is higher at the outer side of the compressible element (7) than in the centre thereof.

8. An optical fibre cable (20) according to any one or more of the preceding claims 1-7, **characterised in that** said at least one compressible element (7) is provided with one or more reinforcing elements (10).

9. An optical fibre cable (20) according to claim 8, **characterised in that** said reinforcing element (10) is centrally provided in the compressible element (7).

10. An optical fibre cable (20) according to claim 3, **characterised in that** one or more reinforcing elements (10) are present in the sheath (8) of the compressible element (7), which reinforcing elements (10) extend along the length of the compressible element (7).

11. An optical fibre cable (20) according to any one or more of the preceding claims 1-10, **characterised in that** said at least one compressible element (7) has a circular cross-section.

12. An optical fibre cable (20) according to any one or more of the preceding claims 1-11, **characterised in that** said at least one compressible element (7) is an elastically compressible element (7).

13. Use of a compressible element (7) in the hollow space (3) of an optical fibre cable (20), which fibre cable (20) comprises a main tube (1) having a wall (2), which wall (2) encloses the aforesaid hollow space (3), in which hollow space (3) one or more guide tubes (4) are present, which guide tube(s) (4) contain(s) at least one optical waveguide (6), for compensation by compression of the difference in volume of water which has entered the hollow space (3) of optical fibre cable (20), said difference in volume being caused by the dlfference in specific volume of water in solid condition and water in liquid condition, said compression element having a lower resistance to deformation that the wall of the guide tube and the wall of the main tube.

14. Use of a compressible element (7) according to claim 13, **characterised in that** said element (7) consists of at least a sheath (8) and a core (9).

15. Use of a compressible element (7) according to claim 13, **characterised in that** said element (7) consists of the same material.

16. Use of a compressible element (7) according to any one or more of the preceding claims 13-15, **characterised in**

**that** the compressibility of the element (7) varies over the cross-section of the element (7).

17. Use of a compressible element (7) according to claim 16, **characterised in that** the compressibility of the element (7) is higher at the outer side of the element (7) than in the centre thereof.

18. Use of a compressible element (7) according to any one or more of the preceding claims 13-17, **characterised in that** said element (7) is provided with one or more reinforcing elements (10).

19. Use of a compressible element (7) according to claim 18, **characterised in that** a reinforcing element (10) is centrally provided in the element (7).

20. Use of a compressible element (7) according to claim 14, **characterised in that** one or more reinforcing elements (10) are present in the sheath (8) of the element (7), which reinforcing elements (10) extend along the length of the element (7).

21. Use of a compressible element (7) according to any one or more of the preceding claims 13-20, **characterised in that** said element (7) has a cylindrical cross-section.

22. Use of a compressible element (7) according to any one or more of the preceding claims 13-21, **characterised in that** said element (7) is an elastically compressible element (7).

23. A method for modifying an optical fibre cable (20) comprising a main tube (1) that encloses a hollow space (3), in which hollow space (3) one or more guide tubes (4) are provided, which guide tubes (4) may or may not be provided with optical waveguides (6), **characterised in that** a freely movable compressible element (7) having a lower resistance to deformation that the wall of the guide tube and the wall of the main tube is installed in said hollow space (3). .

24. A method according to claim 23, **characterised in that** said compressible element (7) is installed by means of a draw, push, float or blow method.

**Patentansprüche**

1. Glasfaserkabel (20), das einen Hauptschlauch (1) mit einer Wand (2) aufweist, welche Wand (2) einen Hohlraum (3) umschließt, in welchem Hohlraum (3) ein oder mehrere Führungsschläuche (4) mit einer Wand (5) vorhanden sind, wobei mindestens einer dieser Führungsschläuche (4) mindestens einen Lichtwellenleiter (6) enthält, **dadurch gekennzeichnet, dass** mindestens ein separates, zusammendrückbares Element (7) in dem Hohlraum (3) vorhanden ist, welches Element (7) einen geringeren Verformungswiderstand hat als die Wand (5) des Führungsschlauchs (4) und die Wand (2) des Hauptschlauchs (1), welches Element entlang der Länge des Hauptschlauchs (1) verläuft und innerhalb des Hohlraums (3) frei beweglich ist.

2. Glasfaserkabel (20) nach Anspruch 1, **dadurch gekennzeichnet, dass** das zusammendrückbare Element (7) keine optischen Fasern enthält.

3. Glasfaserkabel (20) nach einem oder mehreren der vorhergehenden Ansprüche 1 bis 2, **dadurch gekennzeichnet, dass** das mindestens eine zusammendrückbare Element (7) aus mindestens einer Umhüllung (8) und einem Kern (9) besteht.

4. Glasfaserkabel (20) nach Anspruch 3, **dadurch gekennzeichnet, dass** die Umhüllung (8) aus demselben Material besteht wie die Wand (5) des Führungsschlauchs (4).

5. Glasfaserkabel (20) nach einem oder mehreren der vorhergehenden Ansprüche 1 bis 3, **dadurch gekennzeichnet, dass** das mindestens eine zusammendrückbare Element (7) aus demselben Material besteht.

6. Glasfaserkabel (20) nach einem oder mehreren der vorhergehenden Ansprüche 1 bis 5, **dadurch gekennzeichnet, dass** die Kompressibilität des zusammendrückbaren Elements (7) über den Querschnitt des zusammendrückbaren Elements (7) variiert.

7. Glasfaserkabel (20) nach Anspruch 6, **dadurch gekennzeichnet, dass** die Kompressibilität des zusammendrückbaren Elements (7) an der Außenseite des zusammendrückbaren Elements (7) höher ist als in dessen Mitte.

8. Glasfaserkabel (20) nach einem oder mehreren der vorhergehenden Ansprüche 1 bis 7, **dadurch gekennzeichnet, dass** das mindestens eine zusammendrückbare Element (7) mit einem oder mehreren Verstärkungselementen (10) versehen ist.

9. Glasfaserkabel (20) nach Anspruch 8, **dadurch gekennzeichnet, dass** das Verstärkungselement (10) mittig im zusammendrückbaren Element (7) vorgesehen ist.

10. Glasfaserkabel (20) nach Anspruch 3, **dadurch gekennzeichnet, dass** in der Umhüllung (8) des zusammendrückbaren Elements (7) ein oder mehrere Verstärkungselemente (10) vorhanden sind, welche Verstärkungselemente (10) sich entlang der Länge des zusammendrückbaren Elements (7) erstrecken.

11. Glasfaserkabel (20) nach einem oder mehreren der vorhergehenden Ansprüche 1 bis 10, **dadurch gekennzeichnet, dass** das mindestens eine zusammendrückbare Element (7) einen kreisförmigen Querschnitt hat.

12. Glasfaserkabel (20) nach einem oder mehreren der vorhergehenden Ansprüche 1 bis 11, **dadurch gekennzeichnet, dass** das mindestens eine zusammendrückbare Element (7) ein elastisch zusammendrückbares Element (7) ist.

13. Verwendung eines zusammendrückbaren Elements (7) in einem Hohlraum (3) eines Glasfaserkabels (20), welches Faserkabel (20) einen Hauptschlauch (1) mit einer Wand (2) aufweist, welche Wand (2) den vorerwähnten Hohlraum (3) umschließt, in welchem Hohlraum (3) ein oder mehrere Führungsschläuche (4) vorhanden sind, welcher Führungsschlauch bzw. welche Führungsschläuche (4) mindestens einen Lichtwellenleiter (6) enthält/enthalten, um durch Kompression für einen Ausgleich des Volumenunterschieds von Wasser zu sorgen, das in den Hohlraum (3) des Glasfaserkabels (20) eingetreten ist, wobei der Volumenunterschied durch den Unterschied des spezifischen Volumens von Wasser in festem Zustand und Wasser in flüssigem Zustand verursacht ist, wobei das Kompressionselement einen geringeren Verformungswiderstand hat als die Wand des Führungsschlauchs und die Wand des Hauptschlauchs.

14. Verwendung eines zusammendrückbaren Elements (7) nach Anspruch 13, **dadurch gekennzeichnet, dass** das Element (7) aus mindestens einer Umhüllung (8) und einem Kern (9) besteht.

15. Verwendung eines zusammendrückbaren Elements (7) nach Anspruch 13, **dadurch gekennzeichnet, dass** das Element (7) aus demselben Material besteht.

16. Verwendung eines zusammendrückbaren Elements (7) nach einem oder mehreren der vorhergehenden Ansprüche 13 bis 15, **dadurch gekennzeichnet, dass** die Kompressibilität des Elements (7) über den Querschnitt des Elements (7) variiert.

17. Verwendung eines zusammendrückbaren Elements (7) nach Anspruch 16, **dadurch gekennzeichnet, dass** die Kompressibilität des Elements (7) an der Außenseite des Elements (7) höher ist als in dessen Mitte.

18. Verwendung eines zusammendrückbaren Elements (7) nach einem oder mehreren der vorhergehenden Ansprüche 13 bis 17, **dadurch gekennzeichnet, dass** das Element (7) mit einem oder mehreren Verstärkungselementen (10) versehen ist.

19. Verwendung eines zusammendrückbaren Elements (7) nach Anspruch 18, **dadurch gekennzeichnet, dass** das Verstärkungselement (10) mittig im Element (7) vorgesehen ist.

20. Verwendung eines zusammendrückbaren Elements (7) nach Anspruch 14, **dadurch gekennzeichnet, dass** in der Umhüllung (8) des Elements (7) ein oder mehrere Verstärkungselemente (10) vorhanden sind, welche Verstärkungselemente (10) sich entlang der Länge des Elements (7) erstrecken.

21. Verwendung eines zusammendrückbaren Elements (7) nach einem oder mehreren der vorhergehenden Ansprüche 13 bis 20, **dadurch gekennzeichnet, dass** das Element (7) einen kreisförmigen Querschnitt hat.

22. Verwendung eines zusammendrückbaren Elements (7) nach einem oder mehreren der vorhergehenden Ansprüche 13 bis 21, **dadurch gekennzeichnet, dass** das Element (7) ein elastisch zusammendrückbares Element (7) ist.

**23.** Verfahren zur Modifizierung eines Glasfaserkabels (20), das einen Hauptschlauch (1) aufweist, der einen Hohlraum (3) umschließt, in welchem Hohlraum (3) ein oder mehrere Führungsschläuche (4) vorgesehen sind, welche Führungsschläuche (4) mit Lichtwellenleitern (6) versehen sein können oder auch nicht, **dadurch gekennzeichnet, dass** in den Hohlraum (3) ein frei bewegliches, zusammendrückbares Element (7) eingesetzt ist, das einen geringeren Verformungswiderstand hat als die Wand des Führungsschlauchs und die Wand des Hauptschlauchs.

**24.** Verfahren nach Anspruch 23, **dadurch gekennzeichnet, dass** das zusammendrückbare Element (7) durch ein Zieh-, Schiebe-, Gleit- oder Einblasverfahren eingesetzt wird.

## Revendications

**1.** Câble à fibre optique (20) comprenant un tube principal (1) ayant une paroi (2), laquelle paroi (2) délimite un espace creux (3), espace creux (3) dans lequel se trouvent un ou plusieurs tubes de guidage (4) ayant une paroi (5), au moins l'un desdits tubes de guidage (4) contenant au moins un guide d'ondes optique (6), **caractérisé en ce qu'**au moins un élément compressible séparé (7) est présent dans l'espace creux (3), lequel élément (7) présente une plus faible résistance à la déformation que la paroi (5) du tube de guidage (4) et que la paroi (2) du tube principal (1), lequel élément s'étend suivant la longueur du tube principal (1) et est mobile librement à l'intérieur de l'espace creux (3).

**2.** Câble à fibre optique (20) selon la revendication 1, **caractérisé en ce que** l'élément compressible (7) ne contient pas de fibres optiques.

**3.** Câble à fibre optique (20) selon l'une quelconque ou plusieurs des revendications 1 à 2 précédentes, **caractérisé en ce que** ledit au moins un élément compressible (7) est constitué d'au moins une gaine (8) et d'une âme (9).

**4.** Câble à fibre optique (20) selon la revendication 3, **caractérisé en ce que** ladite gaine (8) est constituée du même matériau que la paroi (5) du tube de guidage (4).

**5.** Câble à fibre optique (20) selon l'une quelconque ou plusieurs des revendications 1 à 3 précédentes, **caractérisé en ce que** ledit au moins un élément compressible (7) est constitué du même matériau.

**6.** Câble à fibre optique (20) selon l'une quelconque ou plusieurs des revendications 1 à 5 précédentes, **caractérisé en ce que** la compressibilité de l'élément compressible (7) varie suivant la section transversale de l'élément compressible (7).

**7.** Câble à fibre optique (20) selon la revendication 6, **caractérisé en ce que** la compressibilité de l'élément compressible (7) est supérieure sur la face extérieure de l'élément compressible (7) qu'en son centre.

**8.** Câble à fibre optique (20) selon l'une quelconque ou plusieurs des revendications 1 à 7 précédentes, **caractérisé en ce que** ledit au moins un élément compressible (7) est muni d'un ou plusieurs éléments de renforcement (10).

**9.** Câble à fibre optique (20) selon la revendication 8, **caractérisé en ce que** ledit élément de renforcement (10) est disposé centralement dans l'élément compressible (7).

**10.** Câble à fibre optique (20) selon la revendication 3, **caractérisé en ce qu'**un ou plusieurs éléments de renforcement (10) sont présents dans la gaine (8) de l'élément compressible (7), lesquels éléments de renforce-ment (10) s'étendent suivant la longueur de l'élément compressible (7).

**11.** Câble à fibre optique (20) selon l'une quelconque ou plusieurs des revendications 1 à 10 précédentes, **caractérisé en ce que** ledit au moins un élément compressible (7) présente une section transversale circulaire.

**12.** Câble à fibre optique (20) selon l'une quelconque ou plusieurs des revendications 1 à 11 précédentes, **caractérisé en ce que** ledit au moins un élément compressible (7) est un élément compressible élastiquement (7).

**13.** Utilisation d'un élément compressible (7) dans l'espace creux (3) d'un câble à fibre optique (20), lequel câble à fibre (20) comprend un tube principal (1) ayant une paroi (2), laquelle paroi (2) délimite ledit espace creux (3) mentionné précédemment, espace creux (3) dans lequel se trouvent un ou plusieurs tubes de guidage, lequel ou lesquels tube (s) de guidage (4) contient ou contiennent au moins un guide d'ondes optique (6) destiné à effectuer une compensation par compression de la différence de volume d'eau ayant pénétré dans l'espace creux (3) du câble à fibre optique (20), ladite différence de volume étant provoquée par la différence de volume spécifique de l'eau à l'état solide et de l'eau à l'état liquide, ledit élément de compression ayant une résistance à la déformation plus faible que la paroi du tube de guidage et que la paroi du tube principal.

14. Utilisation d'un élément compressible (7) selon la revendication 13, **caractérisée en ce que** ledit élément (7) est constitué d'au moins une gaine (8) et d'une âme (9).

15. Utilisation d'un élément compressible (7) selon la revendication 13, **caractérisée en ce que** ledit élément (7) est constitué du même matériau.

16. Utilisation d'un élément compressible (7) selon l'une quelconque ou plusieurs des revendications 13 à 15 précédentes, **caractérisée en ce que** la compressibilité de l'élément (7) varie suivant la section transversale de l'élément (7).

17. Utilisation d'un élément compressible (7) selon la revendication 16, **caractérisée en ce que** la compressibilité de l'élément (7) est plus élevée sur la face extérieure de l'élément (7) qu'en son centre.

18. Utilisation d'un élément compressible (7) selon l'une quelconque ou plusieurs des revendications 13 à 17 précédentes, **caractérisée en ce que** ledit élément (7) est muni d'un ou plusieurs éléments de renforcement (10).

19. Utilisation d'un élément compressible (7) selon la revendication 18, **caractérisée en ce qu'**un élément de renforcement (10) est disposé centralement dans l'élément (7).

20. Utilisation d'un élément compressible (7) selon la revendication 14, **caractérisée en ce qu'**un ou plusieurs éléments de renforcement (10) est ou sont présent(s) dans la gaine (8) de l'élément (7), lesquels éléments de renforcement (10) s'étendent suivant la longueur de l'élément (7).

21. Utilisation d'un élément compressible (7) selon l'une quelconque ou plusieurs des revendications 13 à 20 précédentes, **caractérisée en ce que** ledit élément (7) présente une section transversale cylindrique.

22. Utilisation d'un élément compressible (7) selon l'une quelconque ou plusieurs des revendications 13 à 21 précédentes, **caractérisée en ce que** ledit élément (7) est un élément compressible élastiquement (7).

23. Procédé de modification d'un câble à fibre optique (20) comprenant un tube principal (1) qui délimite un espace creux (3), espace creux (3) dans lequel sont disposés un ou plusieurs tubes de guidage (4), lesquels tubes de guidage (4) peuvent ou non être munis de guides d'ondes optiques (6), **caractérisé en ce qu'**un élément compressible librement mobile (7) ayant une résistance à la déformation inférieure à celle de la paroi du tube de guidage et de la paroi du tube principal est installé dans ledit espace creux (3).

24. Procédé selon la revendication 23, **caractérisé en ce que** ledit élément compressible (7) est installé au moyen d'un procédé d'étirage, de poussée, de flottaison ou de soufflage.

Figuur 1

# Figuur 2

Figuur 3

Figuur 4

Figuur 5

Figuur 6

Figuur 7

Figuur 8

## Figuur 9

7

## Figuur 10

7

Samendrukbaarheid

## Figuur 11

## Figuur 12

7

10

## Figuur 13

7

10

## Figuur 14

## Figuur 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6572081 B
- DE 2842604
- US 4815813 A

- EP 1081519 A1
- US 6633709 B
- JP 2006050713 B